# EUROPÄISCHE PATENTANMELDUNG

(11) **EP 1 216 829 A2**
(43) Veröffentlichungstag der Anmeldung: **26.06.2002**
(21) Anmeldenummer: 01124760.8
(22) Anmeldetag: 17.10.2001
(51) Int. Cl.: B41C 1/10

(54) **Mehrstrahl-Abtastvorrichtung**

(30) Priorität: 15.12.2000 DE 10062683
(71) Anmelder: Heidelberger Druckmaschinen Aktiengesellschaft, 69115 Heidelberg (DE)
(72) Erfinder: Fischer, Jörg-Achim, 24235 Laboe (DE); Jacobsen, Thomas, 24111 Kiel (DE)

(57) **Zusammenfassung**

Die Erfindung betrifft eine Mehrstrahl-Abtastvorrichtung für ein Aufzeichnungsgerät mit einer inneren zylindrischen Auflagefläche (3) für ein Aufzeichnungsmedium (4), insbesondere für einen Innentrommel-Belichter (1), umfassend eine Abtasteinheit (5) zum Abtasten des Aufzeichnungsmediums (4) mit mindestens einem Belichtungsstrahl (11), wobei die Abtasteinheit (5) mindestens einen akustooptischen Deflektor oder Modulator (9) und ein in Bezug zu einer Zylinderachse (6) der Auflagefläche (3) axial verschiebbares und drehbares Ablenkelement (12) umfasst. Um eine zeilenweise Abtastung des Aufzeichnungsmediums (4) mit einem oder mehreren, aus einer beliebigen Laserlichtquelle stammenden Belichtungsstrahlen (11) zu ermöglichen, die nicht auf der Zylinderachse (6) auf das Ablenkelement (12) auftreffen und deren Abstände veränderbar sind, wird erfindungsgemäß vorgeschlagen, dass sich der akustooptische Deflektor oder Modulator (9) zusammen mit der Ablenkeinheit (12) um die Zylinderachse (6) dreht und vorzugsweise gleichzeitig auf einer Mehrzahl von Kanälen (S1 ... Sn) mit Spannungssignalen mit unterschiedlichen Frequenzen beaufschlagbar ist, um einen von außen in den akustooptischen Deflektor oder Modulator (9) zugeführten Laserstrahl (10) in eine Reihe von Belichtungsstrahlen (11) aufzuteilen, deren Ausrichtung in Bezug zur Ablenkeinheit (12) unverändert bleibt.

## Beschreibung

Die Erfindung bezieht sich auf das Gebiet der elektronischen Reproduktionstechnik und betrifft eine Mehrstrahl-Abtastvorrichtung für ein Aufzeichnungsgerät, das eine innere zylindrische Auflagefläche für ein Aufzeichnungsmedium aufweist, insbesondere für einen Innentrommel-Belichter, wobei die Mehrstrahl-Abtastvorrichtung eine Abtasteinheit zum Abtasten des Aufzeichnungsmed-iums mit mindestens einem Belichtungsstrahl umfasst, und wobei die Abtasteinheit mindestens einen akustooptischen Deflektor oder Modulator und ein in Bezug zu einer Zylinderachse der Auflagefläche axial verschiebbares und drehbares Ablenkelement zum Ablenken des aus dem akustooptischen Deflektor oder Modulator austretenden Belichtungsstrahls einschließt.

lnnentrommel-Laserbelichter dienen in der Reproduktionstechnik dazu, ein auf der Innenseite einer zylindrischen Trommel aufgespanntes fotoempfindliches Aufzeichnungsmedium zeilenweise mit einem intensitätsmodulierten Laserstrahl zu belichten.

In der US-A-6,052 216 ist bereits ein Innentrommel-Belichter der eingangs genannten Art offenbart, bei dem ein einzelner, aus einer ortsfesten Laserlichtquelle stammender Belichtungsstrahl nach dem Hindurchtritt durch zwei ebenfalls ortsfeste akustooptische Modulatoren auf ein Ablenkelement in Form eines axial verschiebbaren, rotierenden Spiegels gelenkt wird. Von dem Spiegel wird der Belichtungsstrahl auf ein fotoempfindliches Medium auf einer inneren Trommeloberfläche des Belichters reflektiert. Weil die optische Achse des Belichtungsstrahls bei einer derartigen Anordnung auf der von der Zylinderachse gebildeten Drehachse des rotierenden Spiegels liegen muss, um eine zeilenweise Belichtung des fotoempfindlichen Mediums zu ermöglichen, ist der aus den akustooptischen Modulatoren austretende Belichtungsstrahl ein ungebeugter Lichtstrahl 0. Ordnung.

Ein in Bezug zur Drehachse außeraxialer Belichtungsstrahl würde sich nämlich nach der Reflexion am Spiegel nicht in Umfangsrichtung über die Auflagefläche bewegen und damit keine zur Achse senkrechte zeilenweise Abtastung des Mediums gestatten.

Weiter ist es aus der US-A-4,444,470 bei einer optischen Mehrstrahl-Modulationsund Ablenk-Vorrichtung bereits bekannt, zur Steigerung der Aufzeichnungsgeschwindigkeit mit Hilfe eines ortsfest zwischen einer Laserlichtquelle und einem rotierenden Spiegel angeordneten akustooptischen Deflektors eine Reihe von nebeneinander in einer Ebene angeordneten Belichtungsstrahlen zu erzeugen und diese anschließend mit Hilfe des rotierenden Spiegels auf ein fotoempfindliches Aufzeichnungsmedium auf dem äußeren Umfang einer Trommel zu reflektieren. Da nicht sämtliche Belichtungsstrahlen auf einer Achse liegen können, muss hier zur Reflexion der Belichtungsstrahlen ein Polygonspiegel verwendet werden, dessen Drehachse mit der optischen Achse des ungebeugten Laserstrahls einen Winkel einschließt, so dass die Ebene der abgelenkten Belichtungsstrahlen senkrecht zur Trommelachse ist. Eine solche Anordnung benötigt aber zum einen verhältnismäßig viel Platz und lässt sich zum anderen nur bei Außentrommel-Belichtern einsetzen, nicht jedoch bei Innentrommel-Belichtern, wo die Trommelachse mit der Drehachse des rotierenden Ablenkelements zusammenfällt.

Aus der DE-A-41 20 103 ist es zwar bereits bei einem Innentrommel-Belichter an sich bekannt, in einem um die Trommelachse rotierenden und in Bezug zur Innentrommel axial verschiebbaren Gehäuse außer dem Ablenkelement auch noch eine Lichtquelle vorzusehen, die sich zusammen mit dem Ablenkelement um die Trommelachse dreht. Die Lichtquelle kann von einer mehrkanaligen Laserdiodenzeile gebildet werden, aus der die Belichtungsstrahlen im Abstand von der Trommelachse austreten und auf das Ablenkelement auftreffen. Da die Abstände der einzelnen Laserdioden handelsüblicher Laserdiodenzeilen jedoch verhältnismäßig groß sind, müssen die Laserdiodenzeile und das Ablenkelement durch Verdrehen von einem der beiden in Bezug zum anderen um die Drehachse unter einem Winkel zueinander angestellt werden, um Linienanschluss, d.h. eine teilweise Überlappung der erzeugten Bildpunkte auf dem Aufzeichnungsmedium, zu erhalten. Damit die Belichtungsstrahlen aus sämtlichen Laserdioden der Laserdiodenzeile trotz der Anstellung der letzteren in einer zur Drehachse senkrechten Ebene auf das Aufzeichnungsmedium auftreffen, müssen die einzelnen Laserdioden entsprechend der axialen Bewegung des Ablenkelements in Bezug zum Aufzeichnungsmedium zeitverzögert angesteuert werden, wodurch zur Berechnung der Zeitverzögerung und zur Justierung des Belichters ein zusätzlicher Aufwand entsteht.

Ausgehend hiervon liegt der Erfindung die Aufgabe zugrunde, bei einer Mehrstrahl-Abtastvorrichtung der eingangs genannten Art eine zeilenweise Abtastung des Aufzeichnungsmediums mit einem oder mehreren, aus einer beliebigen Laserlichtquelle stammenden Belichtungsstrahlen zu ermöglichen, die nicht auf der Zylinderachse der Auflagefläche auf das Ablenkelement auftreffen und deren Abstände veränderbar sind.

Diese Aufgabe wird erfindungsgemäß durch die im Patentanspruch 1 vorgeschlagene Merkmalskombination gelöst.

Durch die erfindungsgemäße Merkmalskombination behält ein innerhalb des akustooptischen Deflektors oder Modulators aus der Zylinderachse heraus gebeugter und als Belichtungsstrahl verwendeter Teilstrahl seine Ausrichtung in Bezug zu einem um die Zylinderachse als Drehachse rotierenden Spiegel oder Prisma der Abtasteinheit und damit in Bezug zum Aufzeichnungsmedium bei, im Gegensatz zu einer Anordnung, bei der sich der Spiegel oder das Prisma in Bezug zu einem ortsfesten akustooptischen Deflektor oder Modulator dreht.

Eine bevorzugte Ausgestaltung der Erfindung sieht vor, dass der akustooptische Deflektor oder Modulator gleichzeitig auf einer Mehrzahl von Kanälen mit Spannungssignalen mit unterschiedlichen Frequenzen beaufschlagbar ist, um den Laserstrahl in eine Reihe von Belichtungsstrahlen aufzuteilen, deren Anzahl sich durch die Anzahl der gleichzeitig angelegten Frequenzen verändern lässt.

Im Unterschied zum Stand der Technik aus der DE-A-41 20 103 werden hier die Abstände zwischen den Bildpunkten der einzelnen Belichtungsstrahlen auf dem Aufzeichnungsmedium bzw. deren Überlappung durch die Frequenzunterschiede zwischen den angelegten Frequenzen eingestellt, so dass keine Laufzeitkorrekturen erforderlich sind, um die hinter dem Ablenkelement von den Belichtungsstrahlen aufgespannte Ebene senkrecht zur Drehachse auszurichten.

Die aus einem Treiber zugeführten Spannungssignale erzeugen infolge ihrer unterschiedlichen Frequenzen im akustooptischen Deflektor oder Modulator eine Mehrzahl von unterschiedlich stark gebeugten Teilstrahlen 1. Ordnung, die anschließend zur Belichtung des Aufzeichnungsmediums herangezogen werden. Zur Bereitstellung von intensitätsmodulierten Belichtungsstrahlen besitzen die hochfrequenten Spannungssignale nicht nur unterschiedliche Trägerfrequenzen, sondern diese sind auch unterschiedlich moduliert, und zwar jeweils in Abhängigkeit von einem entsprechenden Video-Eingangssignal des Treibers. Diese zur Ansteuerung des akustooptischen Deflektors oder Modulators dienenden modulierten Hochfrequenz-Spannungssignale werden vorzugsweise von einem nicht-rotierenden Hochfrequenz-Treiber erzeugt und kapazitiv oder induktiv in einen Rotor übertragen, in den der akustooptische Deflektor oder Modulator zweckmäßig zusammen mit dem Ablenkelement integriert ist.

Durch die gleichzeitige Beaufschlagung des akustooptischen Deflektors oder Modulators mit einer Mehrzahl von Spannungssignalen unterschiedlicher Trägerfrequenz wird der in den akustooptischen Deflektor oder Modulator einfallende Laserstrahl in eine der Anzahl der unterschiedlichen Frequenzen entsprechende Anzahl von Teilstrahlen 1. Ordnung aufgeteilt, die nach ihrem Austritt aus dem akustooptischen Deflektor oder Modulator als Belichtungsstrahlen zur Abtastung des Aufzeichnungsmediums verwendet werden, während der Teilstrahl 0. Ordnung ausgeblendet wird. Zur Abtastung des von der Zylinderachse äquidistanten Aufzeichnungsmediums werden die Belichtungsstrahlen mit Hilfe des Ablenkelements radial umgelenkt und mit Hilfe einer vorzugsweise telezentrischen Abbildungsoptik auf dem Aufzeichnungsmedium fokussiert. Die verwendete Abbildungsoptik ist bevorzugt so ausgebildet, dass sie durch eine axiale Verschiebung von einem oder mehreren darin enthaltenen Optikelementen eine Veränderung der Punktgröße der Belichtungsstrahlen auf dem Aufzeichnungsmedium gestattet.

Eine weitere bevorzugte Ausgestaltung der Erfindung sieht vor, den Laserstrahl aus einer ortsfesten Laserlichtquelle auf der Zylinderachse der Auflagefläche des Aufzeichnungsmediums und damit auf der Drehachse des Ablenkelements und des akustooptischen Deflektors oder Modulators in den Rotor einzukoppeln und ihn dann vorzugsweise zu einer Seite hin so abzulenken, dass er mit einer optischen Eintrittsfläche des akustooptischen Deflektors oder Modulators einen gleichbleibenden definierten Winkel einschließt, nämlich den von der Lichtwellenlänge des Laserlichts, der Ultraschall-Mittenfrequenz des akustooptischen Deflektors oder Modulators und von der akustischen Geschwindigkeit abhängigen Bragg-Winkel, bei dem der Laserstrahl in der 1. Ordnung eine maximale Beugungsintensität erfährt.

Um dies zu erreichen, wird gemäß einer weiteren bevorzugten Ausgestaltung der Erfindung vorgeschlagen, zur seitlichen Ablenkung des Laserstrahls einen optischen Keil zu verwenden, der sich zusammen mit dem akustooptischen Deflektor oder Modulator dreht und der eine der Lichtquelle zugewandte Lichteintrittsfläche und eine dem akustooptischen Deflektor oder Modulator zugewandte Lichtaustrittsfläche aufweist. Die Abmessungen des optischen Keils und die Ausrichtung der Lichteintrittsfläche und der Lichtaustrittsfläche sind zweckmäßig so gewählt, dass der Laserstrahl zwischen der Lichteintrittsfläche und der Lichtaustrittsfläche von der Drehachse abgelenkt wird und hinter der Lichtaustrittsfläche wieder so in Richtung der Zylinder- oder Drehachse verläuft, dass er diese innerhalb des akustooptischen Deflektors oder Modulators schneidet und vorzugsweise unter dem Bragg-Winkel auf dessen optische Eintrittsfläche auftrifft.

Im Strahlengang vor dem akustooptischen Deflektor oder Modulator ist zweckmäßig weiter ein Optiksystem angeordnet, das den Laserstrahl an seinem Schnittpunkt mit der Drehachse innerhalb des akustooptischen Modulators eine Taille im Laserstrahl ausbildet.

Im folgenden wird die Erfindung anhand eines in der Zeichnung dargestellten Ausführungsbeispiels näher erläutert. Es zeigen:
Fig. 1: eine schematische Ansicht von wesentlichen Teilen einer erfindungsgemäßen Mehrstrahl-Abtastvorrichtung eines Innentrommel-Belichters;
Fig. 2: eine schaubildliche Darstellung zur Erläuterung einer Amplitudenkorrektur von Hochfrequenz-Spannungssignalen eines Hochfrequenz-Treibers einer 3-kanaligen Abtastvorrichtung;
die Figuren 3a, b und c: Matrizen von Kombinationen von Einschaltzuständen, von gemessenen unkorrigierten Lichtpegeln in Abhängigkeit von den Einschaltzuständen, sowie von Korrekturwerten für die Amplituden der Hochfrequenz-Spannungssignale aus Fig. 2.

Der in der Zeichnung teilweise dargestellte Innentrommel-Belichter (1) weist wie herkömmliche Innentrommel-Belichter ein äußeres Gehäuse (2) auf, dessen Innenseite eine teilzylindrische Auflagefläche (3) für eine Druckplatte oder ein anderes bahn- oder bogenförmiges fotoempfindliches Aufzeichnungsmedium (4) bildet. Innerhalb des äußeren Gehäuses (2) des Belichters (1) befindet sich eine Abtasteinheit (5), die in Bezug zum Gehäuse (2) in axialer Richtung einer Zylinderachse (6) der teilzylindrischen Auflagefläche (3) verschiebbar gelagert ist.

Die Abtasteinheit (5) besteht im Wesentlichen aus einer Laserlichtquelle (7) und einem mit einem Drehantrieb (nicht dargestellt) verbundenen, um die Zylinderachse (6) drehbaren Rotor (8). Der hohlzylindrische Rotor (8) enthält u.a. einen akustooptischen Modulator (AOM) (9), in dem ein aus der Laserlichtquelle (7) stammender Laserstrahl (10) in einzelne, intensitäts- oder helligkeitsmodulierte Belichtungsstrahlen (11) aufgeteilt wird, sowie ein Ablenkelement (12), von dem die modulierten Belichtungsstrahlen (11) im Wesentlichen radial zur Achse (6) abgelenkt werden, um das fotoempfindliche Aufzeichnungsmedium (4) auf der Auflagefläche (3) in deren Umfangsrichtung zeilenweise abzutasten und zu belichten. Zur Erhöhung der Aufzeichnungsgeschwindigkeit wird das Aufzeichnungsmedium (4) in Umfangsrichtung der Auflagefläche (3) gleichzeitig entlang von einer der Anzahl der Belichtungsstrahlen (11) entsprechenden Anzahl von Zeilen (13) belichtet. Quer zur Zeilenrichtung, das heißt in Richtung der Achse (6), erfolgt der Vorschub durch axiale Verschiebung der Abtasteinheit (5) in Bezug zum äußeren Gehäuse (2).

Der AOM (9) entspricht im Aufbau bekannten akustooptischen Modulatoren und umfasst einen für den Laserstrahl (10) durchlässigen Kristall sowie einen piezoelektrischen Wandler, der Ultraschallwellen in den Kristall abgibt, wenn eine äußere Wechselspannung am Wandler angelegt wird. An den vom Wandler erzeugten Ultraschallwellen wird der von außen auf den AOM (9) gelenkte Laserstrahl (10) bei seinem Hindurchtritt durch den Kristall gebeugt. Das Maß der Beugung innerhalb des AOM (9), das heißt der Winkel, unter dem ein anschließend als Belichtungsstrahl (11) verwendeter gebeugter Lichtstrahl 1. Ordnung aus dem Kristall austritt, ist abhängig von der Frequenz der angelegten Spannung. Werden dem AOM (9) erfindungsgemäß aus einem Hochfrequenz-Treiber (14) auf n Kanälen (S1 ... Sn) gleichzeitig n Spannungssignale mit unterschiedlichen Frequenzen (f1 ... fn) zugeführt, so wird der Laserstrahl (10) in eine der Anzahl (n) der unterschiedlichen Frequenzen (f1 ... fn) entsprechende Anzahl von Lichtstrahlen 1. Ordnung aufgeteilt, die jeweils unter verschiedenen Winkeln aus dem AOM (9) austreten und nach ihrem Austritt als ein Bündel von Belichtungsstrahlen (11) zum Aufzeichnungsmedium (4) gelenkt werden. Die Intensität oder Helligkeit von jedem dieser Belichtungsstrahlen (11) wird getrennt von derjenigen der anderen Belichtungsstrahlen (11) verändert, indem die mit unterschiedlichen Trägerfrequenzen ausgegebenen Hochfrequenz- Spannungssignale zuvor im Treiber (14) mit unterschiedlichen Video-Eingangssignalen moduliert werden.

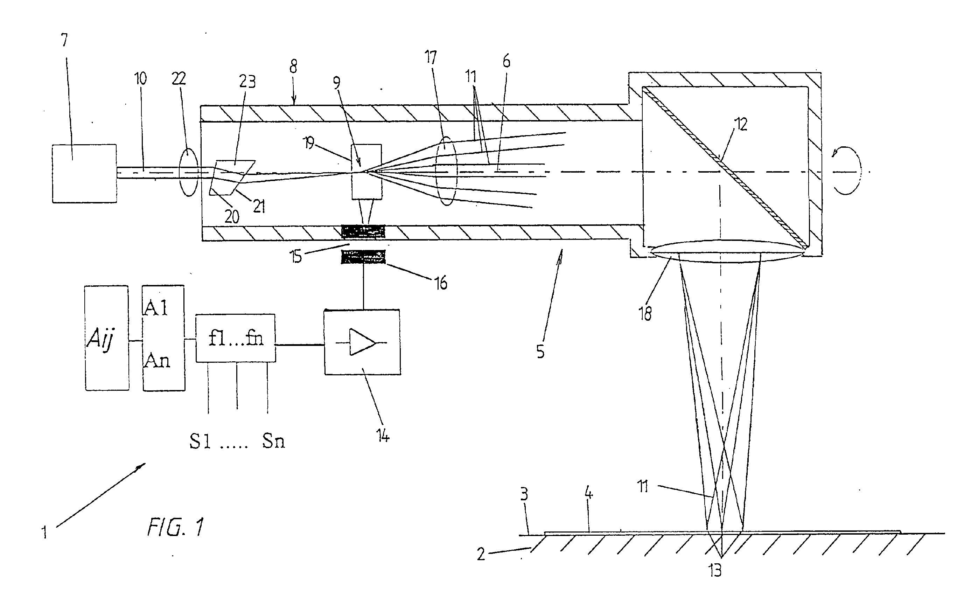

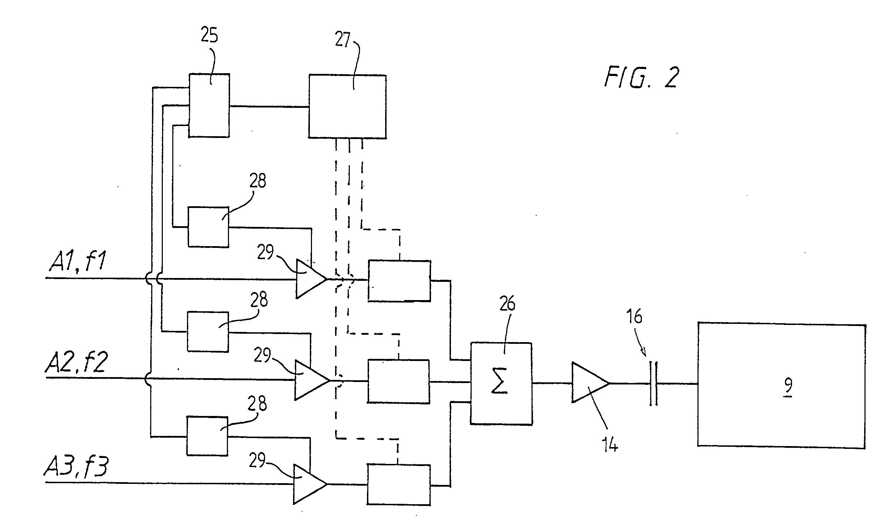

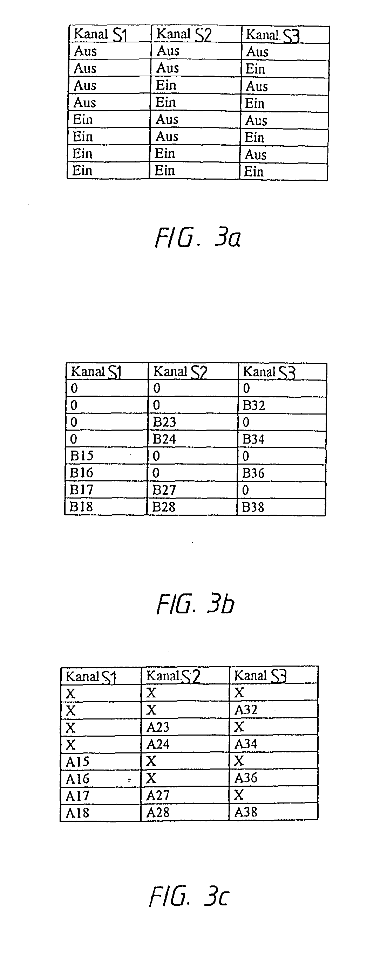

In Fig. 1 veranschaulichen S1 ... Sn die zu übertragenden n Kanäle, f1 ... fn die unterschiedlichen Frequenzen der 1 ... n Kanäle, A1 ... An die Amplituden der Spannungssignale der 1 ... n Kanäle und Aij Korrekturfaktoren zur Korrektur der Amplituden der Spannungssignale auf den 1 ... n Kanälen. Entsprechend sind für eine zur Erläuterung dienende 3-kanalige Abtastvorrichtung in Fig. 2 die Amplituden und Frequenzen der Spannungssignale der 3 Kanäle mit A1, A2 und A3 bzw. f1, f2 und f3 und in Fig. 3 die drei zu übertragenden Kanäle mit S1, S2 und S3 bezeichnet.

Weil sich die beteiligten Kanäle u.a. durch Intermodulationseffekte und/oder Verarmung gegenseitig beeinflussen und weil die jeweiligen Kanäle bedingt durch elektrische Anpassung und durch nicht absolut optimale Bragg-Bedingungen für jeden Kanal nicht exakt dem gleichen Beugungswirkungsgrad unterliegen, werden die Amplituden der Spannungssignale der Kanäle korrigiert, damit die gebeugten Lichtstrahlen der 1. Ordnung jedes Kanals unter gleichen Voraussetzungen die gleiche Lichtintensität aufweisen.

Dazu werden zuerst die Lichtintensitäten oder Lichtpegel der Lichtstrahlen 1. Ordnung für alle möglichen Kombinationen von Ein- und Aus-Zuständen sämtlicher Kanäle S1 ... Sn ermittelt, wie in Fig. 3a anhand des Ausführungsbeispiels mit 3 Kanälen S1, S2, S3 als M x N-Matrix dargestellt. Die Anzahl N der Spalten der Matrix ist dabei gleich der Anzahl n der Kanäle S1 ... Sn, während die Anzahl M der Zeilen der Matrix gleich der Anzahl der möglichen Kombinationen und damit 2ⁿ ist. Fig. 3b zeigt die dazugehörige M x N-Matrix der gemessenen Lichtintensitäten in Abhängigkeit von den verschiedenen Einschaltzuständen, die bei ausgeschaltetem Kanal gleich Null sind und bei eingeschaltetem Kanal in Abhängigkeit vom Einschaltzustand der beiden anderen Kanäle einen Wert Bij aufweisen. Aus dieser M x N-Matrix von Werten wird der kleinste Wert Bijₘᵢₙ ermittelt und als 100 % festgelegt, während die übrigen Werte durch den Wert Bijₘᵢₙ dividiert werden, um für jeden Einschaltzustand einen zugehörigen Korrekturfaktor Aij zu bestimmen. Bei ausgeschaltetem Kanal braucht kein Korrekturfaktor ermittelt zu werden. Die Korrekturfaktoren Aij werden anschließend in einer M x N-Korrekturwert-Matrix abgelegt, wie in Fig. 3c dargestellt. Die Korrekturwert-Matrix wird in Form von Digitalwerten in einem außerhalb des Rotors (5) angeordneten Speicher (25), zum Beispiel einem RAM oder ROM, gespeichert.

Bevor die Spannungssignale der drei Kanäle S1, S2 und S3 mit den Amplituden A1, A2 bzw. A3 und den Frequenzen f1, f2, f3 über ein Summierglied (26) zum Treiber (14) zugeführt werden, um sie zum AOM (9) zu übertragen, werden sie in Abhängigkeit von den jeweiligen Einschaltzuständen der drei Kanäle S1, S2, S3 unter Verwendung der gespeicherten Korrekturwerte Aij korrigiert. Dazu werden laufend die Einschaltzustände jedes Kanals S1, S2 und S3 ermittelt, und von einem Prozessor (27) in Abhängigkeit von der ermittelten Kombination von Einschaltzuständen der jeweilige Korrekturfaktor Aij im Speicher (25) unter der entsprechenden Adresse abgerufen.

Wie in Fig. 2 dargestellt, werden die aus dem Speicher (25) abgerufenen Korrekturfaktoren jeweils in einem dem Speicher (25) nachgeschalteten D/A-Wandler (28) jedes Kanals in Analogwerte umgewandelt, bevor sie einem zugehörigen Verstärker (29) zugeführt werden, um die Amplitude A1, A2 bzw. A3 des Spannungssignals dieses Kanals S1, S2 bzw. S3 entsprechend dem gespeicherten Korrekturfaktor Aij zu verringern, um unter gleichen Voraussetzungen unabhängig von den Einschaltzuständen gleiche Lichtintensitäten der Lichtstrahlen 1. Ordnung zu erzielen.

Da der zur Ansteuerung des AOM (9) verwendete Hochfrequenz-Treiber (14) nicht auf dem Rotor (8) montiert ist, werden die korrigierten Hochfrequenz-Spannungssignale von einer Übertragungseinrichtung (16) induktiv oder vorzugsweise kapazitiv über einen den Rotor (8) umgebenden Luftspalt (15) hinweg zum Rotor (8) und zum AOM (9) übertragen.

Das Ablenkelement (12) besteht im Wesentlichen aus einem unter einem Winkel von vorzugsweise etwa 45 Grad zur Drehachse (6) auf dem Rotor (8) montierten Planspiegel. Jedoch kann an Stelle des Planspiegels (12) auch ein Prisma, holographische bzw. diffraktive Gitter oder ein Hohlspiegel verwendet werden, um das aus dem AOM (9) austretende Belichtungsstrahlenbündel umzulenken und in Bezug zur Achse (6) im Wesentlichen radial auszurichten, so dass die Belichtungsstrahlen (11) im Wesentlichen senkrecht auf das Aufzeichnungsmedium (4) auftreffen.

Der Rotor (8) trägt weiter eine im Strahlengang hinter dem AOM (9) angeordnete Abbildungsoptik, die mehrere vor und ggf. teilweise auch hinter dem Spiegel (12) angeordnete Linsen (17, 18) umfasst. Die Linsen (17, 18) fokussieren die gebeugten divergierenden Belichtungsstrahlen (11) auf dem Aufzeichnungsmedium (4). Die Abbildungsoptik (17, 18) ist vorzugsweise eine telezentrische Optik und kann eine oder mehrere in axialer Richtung verstellbare Linsen (17) umfassen, um die Spotgröße der erzeugten Belichtungspunkte auf dem Aufzeichnungsmedium (4) zu verändern. Die Abbildungsoptik (17, 18) kann weitere optische Elemente (nicht dargestellt) umfassen, um die ungebeugt durch den AOM (9) hindurchtretenden Teilstrahlen 0. Ordnung auszublenden.

Im Strahlengang zwischen der Lichtquelle (2) und dem AOM (9) ist weiter ein optischer Keil (23) auf dem Rotor (8) montiert. Der optische Keil (23) sorgt dafür, dass der entlang der Achse (6) von der Lichtquelle (2) in den hohlzylindrischen Rotor (8) eingekoppelte ungeteilte Laserstrahl (10) unter dem Bragg-Winkel in eine optische Eintrittsfläche (19) des AOM (9) eintritt, um eine maximale Beugungseffizienz in der 1. Ordnung zu erzielen. Dazu wird der Laserstrahl zuerst an einer Eintrittsfläche (20) des optischen Keils (23) so gebrochen, dass er innerhalb des optischen Keils (23) von der Achse (6) weg abgelenkt wird. Anschließend wird der Laserstrahl (10) an einer Austrittsfläche (21) des optischen Keils (23) erneut gebrochen und wieder so in Richtung der Achse (6) gelenkt, dass er diese innerhalb des AOM (9) oder an dessen optischer Eintrittsfläche (19) vorzugsweise unter dem Bragg-Winkel kreuzt.

Ein ebenfalls zwischen der Lichtquelle (2) und dem AOM (9) auf und/oder vor dem Rotor (8) angeordnetes Optiksystem mit einer oder mehreren Linsen (22) dient dazu, den von der Laserlichtquelle (2) kommenden Laserstrahl (10) innerhalb des AOM (9) und auf der Achse (6) zu fokussieren, um dort eine Taille im Strahl (10) zu erzeugen.

## Patentansprüche

1. Mehrstrahl-Abtastvorrichtung für ein Aufzeichnungsgerät mit einer inneren teilzylindrischen Auflagefläche für ein Aufzeichnungsmedium, insbesondere für einen Innentrommel-Belichter, umfassend eine Abtasteinheit zum Abtasten des Aufzeichnungsmediums mit mindestens einem Belichtungsstrahl, wobei die Abtasteinheit mindestens einen akustooptischen Deflektor oder Modulator und ein in Bezug zu einer Zylinderachse der Auflagefläche axial verschiebbares und drehbares Ablenkelement einschließt, **dadurch gekennzeichnet, dass** sich der akustooptische Deflektor oder Modulator (9) zusammen mit dem Ablenkelement (12) um die Zylinderachse (6) dreht.

2. Mehrstrahl-Abtastvorrichtung nach Anspruch 1, **dadurch gekennzeichnet, dass** der akustooptischen Deflektor oder Modulator (9) gleichzeitig auf einer Mehrzahl (n) von Kanälen (S1 ... Sn) mit Spannungssignalen mit unterschiedlichen Frequenzen (f1 ... fn) beaufschlagbar ist, um einen in den akustooptischen Deflektor oder Modulator (9) zugeführten Laserstrahl (10) in eine Reihe von Belichtungsstrahlen (11) aufzuteilen.

3. Mehrstrahl-Abtastvorrichtung nach Anspruch 2, **dadurch gekennzeichnet, dass** die Frequenzen (f1 ... fn) der Spannungssignale jeweils unterschiedlich moduliert sind, um die Intensität der Belichtungsstrahlen (11) unabhängig voneinander zu verändern.

4. Mehrstrahl-Abtastvorrichtung nach Anspruch 2 oder 3, **gekennzeichnet durch** einen Hochfrequenz-Treiber (14) zur Ansteuerung des akustooptischen Deflektors oder Modulators (9) mit den Spannungssignalen.

5. Mehrstrahl-Abtastvorrichtung nach Anspruch 4, **dadurch gekennzeichnet, dass** die Trägerfrequenz jedes Spannungssignals entsprechend einem Video-Eingangssignal des Hochfrequenz-Treibers (14) moduliert ist.

6. Mehrstrahl-Abtastvorrichtung nach Anspruch 5, **gekennzeichnet durch** Einrichtungen (16) zur kapazitiven oder induktiven Übertragung der Spannungssignale vom nicht-rotierenden Treiber (14) zum rotierenden akustooptischen Deflektor oder Modulator (9).

7. Mehrstrahl-Abtastvorrichtung nach einem der Ansprüche 1 bis 6, **gekennzeichnet durch** eine nicht-rotierende Laserlichtquelle (2), aus welcher ein Laserstrahl (10) auf der Zylinderachse (6) in den rotierenden akustooptischen Deflektor oder Modulator (9) zugeführt wird.

8. Mehrstrahl-Abtastvorrichtung nach einem der Ansprüche 1 bis 6, **gekennzeichnet durch** eine im Strahlengang vor dem akustooptischen Deflektor oder Modulator (9) angeordnete Einrichtung (23), die einen von einer Laserlichtquelle (2) erzeugten Laserstrahl (10) unter einem definierten Winkel zu einer optischen Eintrittsfläche (19) des akustooptischen Deflektors oder Modulators (9) auf denselben lenkt.

9. Mehrstrahl-Abtastvorrichtung nach Anspruch 8, **dadurch gekennzeichnet, dass** sich die Einrichtung (23) zusammen mit dem akustooptischen Deflektor oder Modulator (9) dreht.

10. Mehrstrahl-Abtastvorrichtung nach Anspruch 8 oder 9, **dadurch gekennzeichnet, dass** die Einrichtung einen optischen Keil (23) umfasst.

11. Mehrstrahl-Abtastvorrichtung nach Anspruch 10, **dadurch gekennzeichnet, dass** der Laserstrahl (10) hinter einer der Laserlichtquelle (2) zugewandten Lichteintrittsfläche (20) des optischen Keils (23) von der Achse (6) weg divergiert und hinter einer dem akustooptischen Deflektor oder Modulator (9) zugewandten Lichtaustrittsfläche (21) des optischen Keils (23) wieder so in Richtung der Achse (6) verläuft, dass er sich mit dieser innerhalb des akustooptischen Deflektors oder Modulators (9) kreuzt.

12. Mehrstrahl-Abtastvorrichtung nach einem der Ansprüche 1 bis 11, **dadurch gekennzeichnet, dass** der Laserstrahl (10) mit der Normalen zu einer optischen Eintrittsfläche (19) des akustooptischen Deflektors oder Modulators (9) den Bragg-Winkel einschließt.

13. Mehrstrahl-Abtastvorrichtung nach einem der Ansprüche 1 bis 12, **gekennzeichnet durch** ein im Strahlengang vor dem akustooptischen Deflektor oder Modulator (9) angeordnetes Optiksystem (22) zur Erzeugung einer Taille im Laserstrahl (10) innerhalb des akustooptischen Deflektors oder Modulators (9).

14. Mehrstrahl-Abtastvorrichtung nach einem der Ansprüche 1 bis 13, **dadurch gekennzeichnet, dass** das Ablenkelement (12) im Strahlengang hinter dem akustooptischen Deflektor oder Modulator (9) angeordnet ist und die Belichtungsstrahlen (11) im Wesentlichen radial nach außen zum Aufzeichnungsmedium (4) lenkt.

15. Mehrstrahl-Abtastvorrichtung nach einem der Ansprüche 1 bis 14, **dadurch gekennzeichnet, dass** das Ablenkelement einen Spiegel (12), ein Prisma, holographische oder diffraktive Gitter oder einen Hohlspiegel umfasst.

16. Mehrstrahl-Abtastvorrichtung nach einem der Ansprüche 1 bis 15, **gekennzeichnet durch** eine im Strahlengang hinter dem akustooptischen Deflektor oder Modulator (9) angeordnete Abbildungsoptik (17, 18).

17. Mehrstrahl-Abtastvorrichtung nach Anspruch 16, **dadurch gekennzeichnet, dass** die Abbildungsoptik (17, 18) eine telezentrische Abbildungsoptik ist.

18. Mehrstrahl-Abtastvorrichtung nach einem der Ansprüche 2 bis 17, **gekennzeichnet durch** Einrichtungen zur Korrektur der Amplituden (A1 ... An) von jedem der Spannungssignale zur Erzeugung identischer Lichtintensitäten der Belichtungsstrahlen (11).

19. Mehrstrahl-Abtastvorrichtung nach Anspruch 18, **gekennzeichnet durch** einen Speicher (SP) mit einer Matrix von Korrekturwerten Aij für jeden von M x N möglichen Einschaltzuständen der Mehrzahl (n) von Kanälen (S1 ... Sn), wobei N = n und M = 2ⁿ, sowie Einrichtungen zum Verändern der Amplituden (A1 ... An) der Spannungssignale mit einem der gespeicherten Korrekturwerte Aij.

20. lnnentrommel-Laserbelichter mit einer Mehrstrahl-Abtastvorrichtung nach einem der vorangehenden Ansprüche.
